# EUROPEAN PATENT APPLICATION

(11) **EP 1 404 088 A1**
(43) Date of publication of application: **31.03.2004**
(21) Application number: 02738875.0
(22) Date of filing: 28.06.2002
(51) Int. Cl.: H04M 1/02

(54) **CELL PHONE**

(30) Priority: 03.07.2001 JP 2001202030
(71) Applicant: MITSUBISHI DENKI KABUSHIKI KAISHA, Tokyo 100-8310 (JP)
(72) Inventor: AIKAWA, M., c/o Mitsubishi Denki Kabushiki Kaisha, Tokyo 100-8310 (JP); ODA, T., c/o Mitsubishi Denki Kabushiki Kaisha, Tokyo 100-8310 (JP)
(74) Representative: Popp, Eugen, Dr.
(86) International application number: PCT/JP2002/006592
(87) International publication number: WO 2003/005683

(57) **Abstract**

A mobile telephone including a first casing (1) and a second casing (2) rotatably connected about a hinge (10) as an axis; the first casing (1) having an opposing face opposite one face of the second casing (2) when the first casing (1) and the second casing (2) are folded in two into a closed state. Further, the first casing (1) is provided with a display (7) for displaying text or images, close to the hinge on the opposing face, on an exposed part exposed by the second casing (2) when in a folded state; and the second casing (2) is provided with an opening at a position overlapping the exposed part, when the first casing (1) and the second casing (2) are in an open state, with the hinge (10) as axis. Thus, whether in the closed state or the open state, the display can be utilized. Further, since the display is arranged to overlap the hinge axis, a large display can be realized.

## Description

### TECHNICAL FIELD

The present invention relates to mobile telephones that can effectively utilize their displays.

### BACKGROUND ART

Recently, small sized mobile telephone models that can fit into a user's pocket are becoming preferred by users. Among them, models that are folded when they are being carried so that they are not bulky, and that are opened when in use, enable display and button size to be ensured, and thus folding-type mobile telephones with good operability are widely used.

However, folding-type mobile telephones are inconvenient in that, when folded, a main display cannot be directly viewed from the outside, and it is not possible to quickly view necessary information about incoming calls. Therefore, in order to be able to view minimal information for incoming calls and similar situations even when in the folded state, there are mobile telephones that have a sub-display provided in the outer face of the casing.

With mobile telephones having the conventional sub-display as described above, it is possible to view a limited amount of information while in the folded state, but, when using it in the open state, because the sub-display is on the opposite face to operation components such as selectors and the main display, the mobile telephone user cannot view nor use the sub-display.

Japanese Patent Laid-Open No. 1999-088483 discloses a mobile telephone that does not have a sub-display. In this mobile telephone, since a display is provided in a narrow space below the hinge and above the operation keys, there is a problem in that only a small display is feasible.

### DISCLOSURE OF INVENTION

The present invention has as an object the provision of a mobile telephone that solves these problems and enables effective display utilization.

A mobile communications device according to this invention comprises a mobile telephone having: a first casing and a second casing rotatably connected by a hinge as an axis; the first casing having an opposing face opposite one face of the second casing when the first casing and the second casing are folded in two into a closed state; wherein the first casing has a display for displaying text or images on an exposed part close to the hinge on the opposing face and exposed by the second casing when in a folded state; and the second casing is provided with an opening at a position overlapping the exposed part when the first casing and the second casing are in an open state, with the hinge as the axis.

In another aspect, the first casing is provided with a selector for selecting information displayed on the display in the exposed part, and the second casing has the opening at a position overlapping the selector when the first casing and the second casing are folded in two into the closed state, with the hinge as axis.

In another aspect, when the first casing and the second casing are in the open state with the hinge as the axis, the edge of the opening touches, at a position away from the axis of the hinge, on the surface of the first casing, and thus the hinge together with the second casing are supported.

Furthermore, in a mobile telephone with a first casing and a second casing rotatably connected through the hinge axis, the first casing having an opposing face opposite one face of the second casing when the first casing and the second casing are folded in two into a closed state, the first casing has a display for displaying text or images close to the hinge on the opposing face; the second casing is provided with an opening at a position overlapping the display when the first casing and the second casing are folded in two into a closed state, with the hinge as the axis; and the hinge supports both edges of the opening.

In another aspect, the display is arranged to overlap the axis of the hinge.

### BRIEF DESCRIPTION OF DRAWINGS

Fig. 1 is a front view of a mobile telephone according to Embodiment 1 of the present invention;
Fig. 2 is a side view of the mobile telephone according to Embodiment 1 of the invention;
Fig. 3 is a front view of a mobile telephone according to Embodiment 2 of the invention; and
Fig. 4 is a front view of a mobile telephone according to Embodiment 3 of the invention.

### BEST MODE FOR CARRYING OUT THE INVENTION

### Embodiment 1.

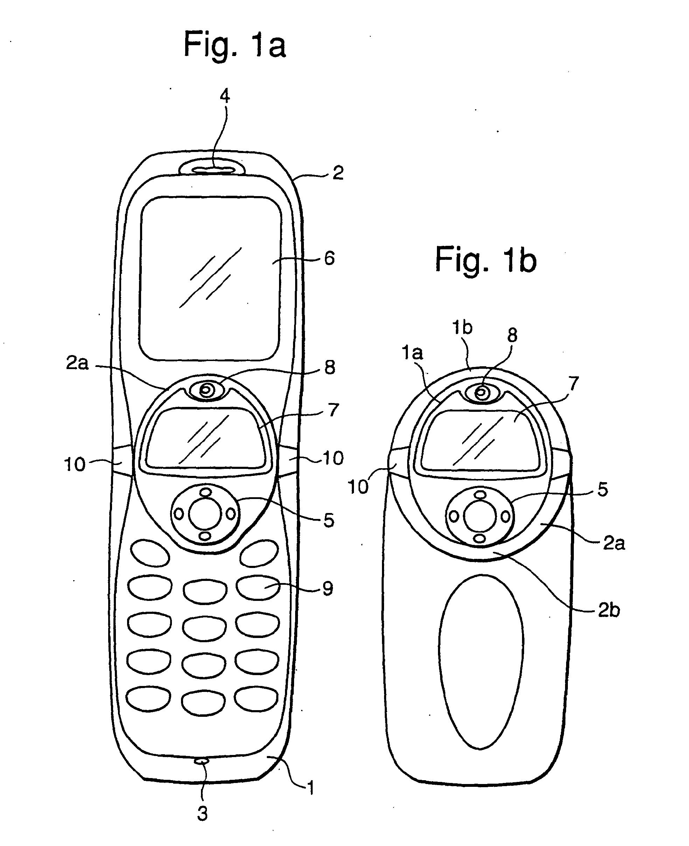

Fig. 1 is a front view illustrating the external appearance of a mobile telephone according to Embodiment 1. Here, Fig. 1(a) illustrates an upper casing of the folding casing, in an open state with regard to a lower casing, with a hinge as axis, and Fig. 1(b) illustrates the upper casing in a closed state.

In Fig. 1, reference numeral 1 indicates the lower casing of the folding mobile telephone, reference numeral 2 indicates the upper casing of the mobile telephone, and the mobile telephone is configured so that it can open and close rotatably about the hinge 10 as center. Here, an opening is provided so that the hinge 10 edge of the upper casing 2 does not cover a sub-display 7 on the lower casing.

Reference numeral 3 indicates a microphone, arranged at the lower edge of the front face of the lower casing 1, that converts a user's voice into electrical signals, reference numeral 4 indicates a speaker, arranged at the upper edge of the front face of the upper casing 2, that outputs the voice of the communication partner, reference numeral 5 indicates a selector, arranged on the lower casing 1, for choosing from menus or similar displayed on a main display 6 or the sub-display 7, reference numeral 6 indicates the main display, arranged on the upper casing 2, for displaying text or graphic information generated within the mobile telephone, or information obtained externally through a network, reference numeral 7 indicates the sub-display for displaying a menu for dialing, other text information, or graphic information, reference numeral 8 indicates a camera, and reference numeral 9 indicates numeric keys for inputting text.

Next, the operation of this mobile telephone is explained, referring to Fig. 1.

Fig. 1(a) illustrates the state in which the upper casing 2 is open, and the sub-display 7, in this state, faces out with the front face of the lower casing 1, that is, the face with the numeric keys 9. Here, the upper casing 2 is provided with an opening 2a at a position overlapping an exposed part 1a of the lower casing 1 when the lower casing 1 and the upper casing 2 are in the open state with the hinge 10 as axis. Therefore, during usage with the casing in the open state, due to the opening 2a, the upper casing 2 does not cover or hide the display 7, and thus a user of this mobile telephone can operate the numeric keys or the selector 5 while viewing the sub-display 7. In addition, the user can carry out internet browsing, dialing operations, or similar, while viewing the sub-casing 7.

As may be understood from Fig. 1(a), since the upper casing 2 is provided with the main display on an opposing face opposite the lower casing 1 when the lower casing 1 and the upper casing 2 are folded in two into the closed state, the mobile telephone user can use the main display 6 and the sub-display 7 at the same time. Therefore, as an example, while displaying an image of one's own face taken by the camera on the sub-display 7, it is possible to display images, such as that of a communication partner's face, sent from the communication partner, on the main display 6.

Fig. 1(b) on the other hand, illustrates the state where the upper casing 2 is closed with respect to the lower casing 1, that is, in a folded state. At this time, since the upper casing 2 does not cover the sub-display 7, due to the opening provided on the hinge 10 side of the upper casing 2, it is possible for the user to view the sub-display 7 while the casing is in the folded state. That is, when the upper casing 1 and the lower casing 2 are folded in two into the closed state, the sub-display 7 is provided for displaying text or images on the exposed part 1a. This exposed part 1a is provided close to the hinge 10, and on the opposing face of the lower casing 1 opposite one face of the upper casing 2, and is exposed through the upper casing 2 when in the folded state.

Therefore, using the selector 5, the mobile telephone user can operate the mobile telephone while viewing information displayed on the sub-display 7.

With the mobile telephone of Embodiment 1 as described above, since the opening 2a is provided at the hinge-edge face of the upper casing 2, whether in the open state or in the closed state, the mobile telephone user can view the sub-display 7, and can effectively utilize the sub-display 7.

Further, since the opening 2a does not cover the selector 5 when the casing is folded in two into the closed state, the mobile telephone user can operate the selector 5.

Further, the lower casing 1 is provided with the selector 5 for selecting information displayed on the sub-display 7 on the exposed part 1a. The upper casing 2 is provided with the opening 2a at a position overlapping the selector 5, when the lower casing 1 and the upper casing 2 are folded in two into a closed state with the hinge 10 as the axis. Thus, whether the casing is in the folded state or in the open state, the advantage of being able to operate the selector is realized.

Next, a configuration for supporting the upper casing 2 is explained.

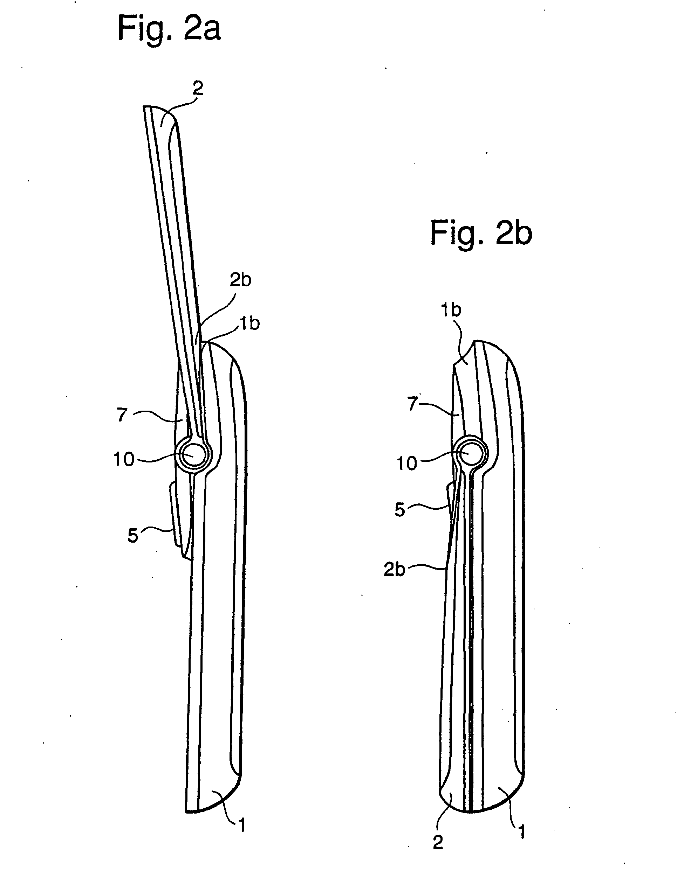

Fig. 2 is a side view of the mobile telephone of Embodiment 1, and (a) illustrates the open state and (b) illustrates the closed state. In Fig. 2, reference numerals identical to those of Fig. 1 represent identical or equivalent members.

In the mobile telephone illustrated in Fig. 2, when the lower casing 1 and the upper casing 2 are open with the hinge 10 as axis, the edge of the opening 2b touches at a position 1b away from the axis of the hinge 10 on the surface of the lower casing 1. In this way, the upper casing 2 is supported at support points, which are vertices of a triangular shape, by means of two points on the hinge 10 and the contact point 1b, and it is possible to compensate for strength deterioration around the hinge 10 caused by the provision of the opening. Also, because the lower casing 1 and the upper casing 2 are supported by the contact surface provided around the exposed part 1a of the lower casing 1 and by the contact surface provided at the edge of the opening of the upper casing 2, improved strength can be realized.

In the above explanation, the sub-display 7 and the selector 5 are provided on the exposed part 1a; however, the selector 5 may be provided without the sub-display 7. Even in this case, whether the casing is in the open state or in the closed state, the advantage of having a convenient-to-use operation unit is obtained. As an option, it is possible to provide, outside of the exposed part, a display that can be used with the casing in the folded state.

### Embodiment 2

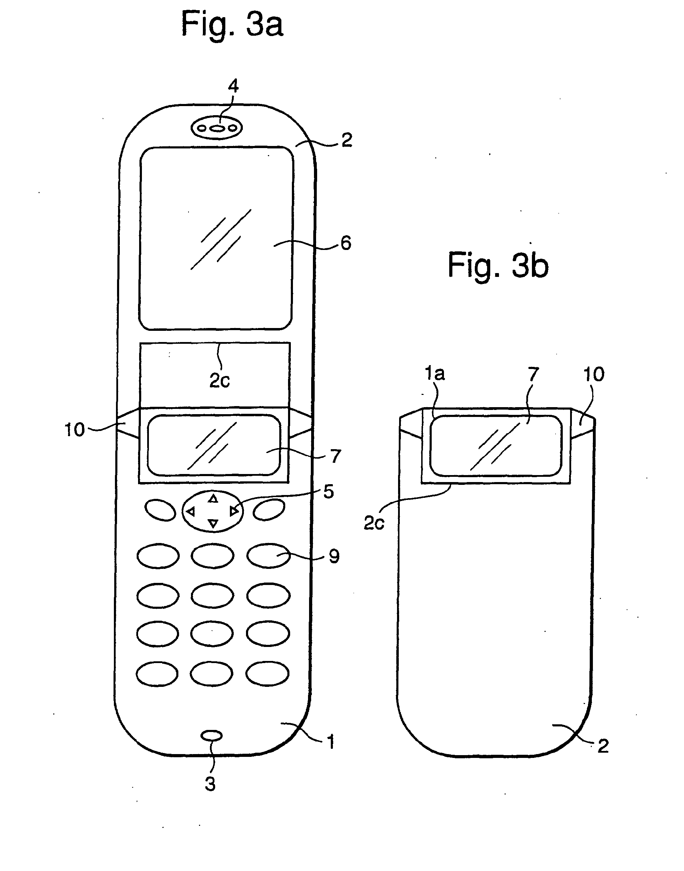

Fig. 3 is a front view illustrating an external appearance of a mobile telephone according to Embodiment 2 of the invention. Here, Fig. 3(a) illustrates an upper casing of a folding casing in an open state relative to a lower casing, with a hinge as axis; Fig. 3(b) illustrates the upper casing in a closed state. In Fig. 3, reference numerals identical to those of Fig. 1 represent identical or equivalent parts.

In Embodiment 2, an opening 2c is provided in the upper casing 2 so that, when the casing is closed, the sub-display 7 will not be covered. In other words, the sub-display 7 for displaying text or images is provided near the hinge 10, on the lower casing 1, on an opposing face opposite one face of the upper casing 2 when the lower casing 1 and the upper casing 2 are folded in two into a closed state. The upper casing 2, on the other hand, is provided with an opening at a position overlapping the sub-display 7 when the lower casing 1 and the upper casing 2 are folded in two into a closed state with the hinge 10 as axis.

In the same way as in Embodiment 1, the configuration described above also has the advantage of being able to use the sub-display 7 in both the folded casing state and the open state.

In the mobile telephone of Fig. 3, while the selector 5 is not provided in the exposed part 1a created by the opening 2c, the selector 5 may also be provided in the exposed part, similarly to Embodiment 1. In the mobile telephone of Fig. 3, an additional selector 5 may also be provided, on the upper casing 2, on the opposite face to the face on which the main display 6 is provided, and it may be arranged to enable menu selection and similar, using the sub-display 7 even when the casing is in the folded state.

### Embodiment 3

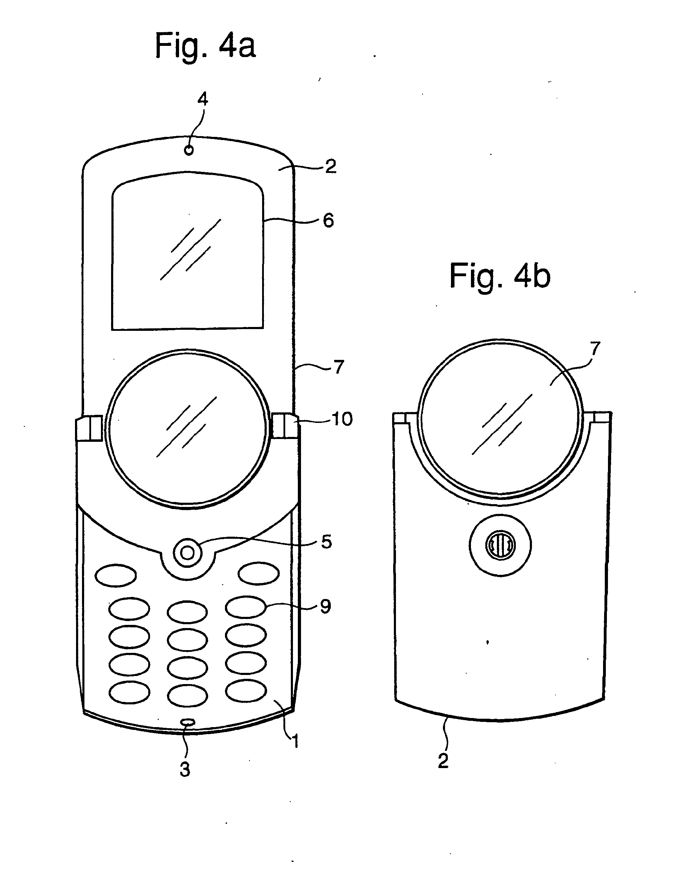

Fig. 4 is a front view illustrating an external appearance of a mobile telephone according to Embodiment 3 of the invention. Fig. 4(a) illustrates an upper casing of a foldable casing in an open state relative to a lower casing with a hinge as axis; and Fig. 4(b) illustrates the upper casing in a closed state. In Fig. 4, reference numerals identical to those of Fig. 1 represent identical or equivalent members.

Basically, the mobile telephone of Fig. 4 resembles the mobile telephone of Fig. 1 but there is no selector 5 in the exposed part and a large sub-display 7 can be realized.

In the embodiments explained above, the sub-display is arranged to overlap the hinge axis and also to protrude from the hinge area in projection along the hinge axis towards the upper side and/or lower outer side. Thus, by providing the hinge, there are few size constraints on the display, and the advantage of a large sub-display can be realized.

Further, in the embodiments explained above, the sub-display 7 is arranged in the proximity of the hinge, but it may also be arranged in positions other than the proximity of the hinge.

Further, the proximity of the hinge means the proximity of the folding axis of the folding casing, and includes:(1) obviously situations where part of the sub-display 7 overlaps the rotating axis of the hinge 10, (2) situations where part of the sub-display 7 is between the numerical keys 9 or the selector 5 and the hinge 10, and/or (3) situations where at least part of the sub-display 7 is on an opposite side to the numerical keys 9 with respect to the hinge 10, in the area from the hinge 10 to the edge of the lower casing 1. In situations where the sub-display 7 is more towards the hinge 10 than the numerical keys 9, when a user is operating the numerical keys 9 or the selector 5, the user's hands do not hide the sub-display 7 and the advantage of good operability is obtained.

Further, in the embodiment described above, the sub-display 7 is arranged to extend from the cross-section area of the hinge 10 in projection, along the hinge 10 axis connecting the two parts of the hinge 10, to the area of the outer face of the lower casing 1 excluding the above described projection area. Thus, compared to the case where the sub-display 7 is contained within the projection area between two parts of the hinge 10 as described above, the advantage of facilitating a large sub-display 7 is realized.

In addition, this invention can be used with any portable terminal, even multi-folding mobile devices, once they have a display and voice communication functions.

### INDUSTRIAL APPLICABILITY

As described above, a mobile telephone according to the present invention may be applied to foldable mobile telephones for effective display utilization.

## Claims

1. A mobile telephone comprising:
a first casing and a second casing rotatably connected by a hinge as an axis, the first casing having an opposing face opposite one face of the second casing when the first casing and the second casing are folded in two into a closed state; wherein
the first casing has a display for displaying text or images on an exposed part close to the hinge on the opposing face and exposed by the second casing when in a folded state; and
the second casing is provided with an opening at a position overlapping the exposed part, when the first casing and the second casing are in an open state, with the hinge as the axis.

2. The mobile telephone according to claim 1, wherein the first casing has a selector for selecting information displayed on the display in the exposed part, and the second casing is provided with the opening at a position overlapping the selector, when the first casing and the second casing are folded in two into the closed state, with the hinge as the axis.

3. The mobile telephone according to claim 1, wherein, when the first casing and the second casing are in the open state with the hinge as the axis, the edge of the opening touches, at a position away from the axis of the hinge, on the surface of the first casing whereby the edge and the hinge support the second casing.

4. A mobile telephone comprising:
a first casing and a second casing rotatably connected by a hinge as an axis, the first casing having an opposing face opposite one face of the second casing when the first casing and the second casing are folded in two into a closed state; wherein
the first casing has a display for displaying text or images, close to the hinge, on the opposing face;
the second casing is provided with an opening at a position overlapping the display when the first casing and the second casing are folded in two into the closed state, with the hinge as the axis; and
the hinge supports opposing edges of the opening.

5. The mobile telephone according to claim 1 or claim 4, wherein the display is arranged to overlap the axis of the hinge.
